# EUROPÄISCHE PATENTSCHRIFT

(11) **EP 1 888 900 B1**
(45) Veröffentlichungstag und Bekanntmachung des Hinweises auf die Patenterteilung: **02.06.2010**
(21) Anmeldenummer: 06722751.2
(22) Anmeldetag: 05.04.2006
(51) Int. Cl.: F02D 41/30, B60K 26/04, F02D 35/00

(54) **ÜBER DEN KRAFTSTOFFVERBRAUCH GESTEUERTES KRAFTFAHRZEUG**
VEHICLE HAVING ITS OPERATING CONDITIONS REGULATED BY FUEL CONSUMPTION
VÉHICULE À MOTEUR À FONCTIONNEMENT RÉGULÉ PAR LA CONSOMMATION DE CARBURANT

(30) Priorität: 19.04.2005 DE 102005017965
(43) Veröffentlichungstag der Anmeldung: 20.02.2008
(73) Patentinhaber: Guzman, Cristobal, 74363 Güglingen (DE)
(72) Erfinder: Guzman, Cristobal, 74363 Güglingen (DE)
(74) Vertreter: Pöhner, Wilfried Anton, Dr.
(86) Internationale Anmeldenummer: PCT/DE2006/000601
(87) Internationale Veröffentlichungsnummer: WO 2006/111128

(56) Entgegenhaltungen:
- DE-A1- 10 024 231
- FR-A- 2 813 050
- FR-A- 2 838 683
- US-A- 4 590 568
- US-A- 4 716 872

## Beschreibung

Es ist bekannt, dass bei modernen Fahrzeugen (Pkw, Lkw) der momentane Kraftstoffverbrauch während des Fahrens erfasst und angezeigt wird, was auf analoge oder digitale Weise erfolgt. Die Höhe des Kraftstoffverbrauchs hängt nicht nur von der Motorleistung eines Fahrzeugs sondern auch von der Fahrweise des Einzelnen und der Straßensituation ab. Bei hohen Geschwindigkeiten, bei ständigem Abbremsen und Beschleunigen im Stadtverkehr steigt der Kraftstoffverbrauch stark an. Diese Anzeigen ermöglichen dem Fahrer, den Kraftstoffverbrauch zu kontrollieren und somit seine Fahrweise so anzupassen, um den Kraftstoffverbrauch zu reduzieren. Dabei ist es allerdings notwendig, auf die Anzeige regelmäßig zu achten, um durch das Betätigen des Gaspedals oder das Einlegen eines günstigeren Gangs den Verbrauch des Kraftstoffs unter Kontrolle zu halten.

Weiterhin ist es im Stand der Technik bekannt, in einem Fahrzeug elektronische Regler einzubauen, welche zur Steuerung der Fahrzeuggeschwindigkeit eingesetzt werden. Diese Geschwindigkeitsregler werden als Tempomat bezeichnet. Hierbei wird eine bestimmte Geschwindigkeit als Sollwert vorgegeben und von der Motoreinstellung eingeregelt und eingehalten. Der Fahrer kann mit der vorgenommenen Motoreinstellung mit einer konstanten Geschwindigkeit die gewünschte Strecke zurücklegen, ohne mit dem Gaspedal während des Fahrens arbeiten zu müssen. Bei erforderlichem Abbremsen oder Beschleunigen aufgrund einer bestimmten Verkehrssituation (z. B. Stau, Stadtverkehr) kann die vorgegebene Motoreinstellung durch das Betätigen des Brems- oder Kupplungspedals deaktiviert werden. Der Nachteil der Verwendung des Tempomat besteht darin, dass die Höhe des Kraftstoffverbrauchs in Abhängigkeit z. B. vom Streckenrelief nicht beachtet wird.

Die Erfindung hat sich zur Aufgabe gestellt, den Kraftstoffverbrauch von Fahrzeugen ökonomischer zu gestalten, indem bestimmte Maßnahmen bei der Einstellung der Motorleistung vorgenommen werden, um den Kraftstoffverbrauch gezielt zu reduzieren.

Diese Aufgabe wird erfindungsgemäß dadurch gelöst, dass der Sollwert des Kraftstoffverbrauchs vorgegeben wird und der gemessene Wert bei der Motorsteuerung genutzt wird.
Hierbei wird ein bestimmter Wert des Kraftstoffverbrauchs als Sollwert vorgegeben und von der Motoreinstellung eingeregelt und eingehalten. Das Einhalten des Sollwerts erfolgt dadurch, dass der Istwert des Kraftstoffverbrauchs gemessen und an die Motorsteuerung weitergeleitet wird. Der gemessene Istwert wird dann mit dem Sollwert verglichen und durch entsprechende Stellbefehle die Motordrehzahl bzw. -leistung derart verändert, dass sich der Verbrauchswert an den vorgegebenen Sollwert angleicht. Das motorbetriebene Fahrzeug gemäß der Erfindung, bei dem der Kraftstoffverbrauch als Sollwert vorgegebenen wird, führt im Gegensatz zu den schon vorhandenen Kraftstoffverbrauchsanzeigen zu einer automatischen Kraftstoffeinsparung. Dies ermöglicht dem Fahrer, sich mehr auf den Verkehr zu konzentrieren, ohne auf den Kraftstoffverbrauch achten zu müssen.
Die Bedienungsweise eines Kraftstoffverbrauchreglers erfolgt ähnlich einer Geschwindigkeitsregelanlage (z. B. Tempomat). Der Unterschied besteht darin, dass der Kraftstoffverbrauch anstelle der Geschwindigkeit als Sollwert eingegeben wird, welcher dann genau eingehalten wird. Die bauliche Realisierung des erfindungsgemäß vorgeschlagenen Regelkreises lässt keine Schwierigkeiten erwarten, da dessen Aufbau die weitgehende Übernahme und Verwendung der Bauteile des Tempomat erlaubt und nur das Regelsignal auf anderm Wege, nämlich über den Kraftstoffverbrauch ermittelt wird. Die auf diese Weise erreichte Kraftstoffeinsparung trägt nicht nur zur Senkung der Kraftstoffkosten des Einzelnen sondern zur Ressourcenschonung unserer Umwelt bei.

In einer anderen Betriebsart die nicht Teil der Erfindung ist kann das Regelsystem des Kraftstoffverbrauchsreglers als Geschwindigkeitsregelanlage (Tempomat) derart geschaltet werden, dass beide Komponenten - Kraftstoffverbrauch und Geschwindigkeitseinstellung des Motors - auf dasselbe Stellglied des Motors einwirken. Die über den Tempomat eingestellte Geschwindigkeit kann so lange eingehalten werden, bis der vorgegebene Wert des Kraftstoffverbrauchs nicht überschritten wird. Dies bedeutet, dass bei dieser Alternative der Kraftstoffverbrauchswert kein fester Sollwert sondern eine Obergrenze ist. Die Regelung über die Geschwindigkeit erfolgt somit nur dann, wenn der Sollwert des Kraftstoffverbrauchs nicht überschritten wird. Ein Vorteil besteht darin, dass sämtliche Daten- und Trägerkreise vorhanden sind und nur noch miteinander verbunden werden müssen, um eine ökonomische Fahrweise zu gewährleisten.

Weiterhin ist die Beschleunigung über den eingestellten Sollwert des Kraftstoffverbrauchs möglich, um z. B. gefährliche Verkehrssituationen zu entschärfen, wobei die vorgenommene Motorsteuerung durch das Betätigen des Gas- oder Bremspedals deaktiviert werden kann.

In einer Weiterbildung wird die manuelle Deaktivierung vorgesehen, um das Kraftfahrzeug bei Bedarf auch konventionell zu betreiben.

In einer vorteilhaften Weiterbildung der Erfindung ist vorgesehen, mehrere, in ihrem Wert unterschiedliche Sollwerte des Kraftstoffverbrauchs vorzusehen.

Im speziellen können durch diese Lehre Maßnahmen der Regelung geschaffen werden, welche bei der Einstellung des Sollwerts des Kraftstoffverbrauchs wechselnde Straßensituationen (Innenstadt, Landstraße und Autobahn) berücksichtigt. Der Kraftstoffverbrauch in der Innenstadt ist bekanntermaßen *bei dem* ständigen Abbremsen oder Beschleunigen höher als der auf einer freien Landstraße beim Fahren mit konstanter Geschwindigkeit. Deswegen empfiehlt sich drei unterschiedliche Straßensituationen. (Innenstadt, Landstraße und Autobahn) beim Kraftstoffverbrauchsregler manuell einstellbar zu machen.

Weiterhin könnte die Einstellung des Kraftstoffverbrauchs über das Navigationssystem automatisch erfolgen. Dies ermöglicht, dass der Kraftstoffverbrauchsregler selbsttätig und von allein angemessen reagiert. Wenn man z. B. von der Autobahn in die Stadt hineinfährt, wird in diesem Fall die Sollwertgrenze des Kraftstoffverbrauchs automatisch erhöht. Die mit der Erfindung erzielten Vorteile bestehen in der automatischen Anpassung des Kraftstoffreglers an die Straßenverkehrssituation.

Weitere Einzelheiten, Merkmale und Vorteile der Erfindung lassen sich dem nachfolgenden Beschreibungsteil entnehmen, indem zwei Ausführungsbeispiele anhand der Zeichnungen näher erläutert sind.
**Figur 1****:** der erfindungsgemäß vorgeschlagene Regelkreis als Blockschaltbild,
**Figur 2****:** der erfindungsgemäß vorgeschlagene Regelkreis in Zusammenwirken mit einem Tempomat

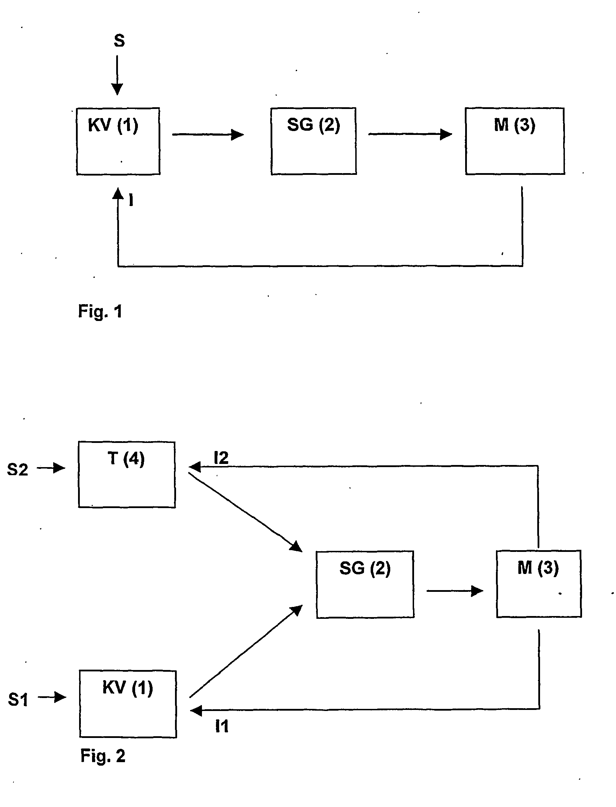

Der in der ersten Zeichnung (Fig. 1) als Blockschaltbild dargestellte Regelkreis wird aus drei Messgliedern gebildet. Das erste Messglied ist der Kraftstoffverbrauchsregler (1). Hier wird der Sollwert des Kraftstoffverbrauchs vorgegeben und der gemessene Istwert zugeführt. Die hierbei ermittelte Regelgrösse wirkt auf das Stellglied (2) zur Einstellung der Motorleistung (3) ein. Gleichzeitig wird der Istwert des Kraftstoffverbrauchs mit einer bestimmten Abtastzeit gemessen und vom Motor (3) zum Regler (1) weitergeleitet. Der Kraftstoffverbrauchsregler vergleicht den gemessenen Istwert mit dem Sollwert und gleicht den Istwert an den vorgegebenen Sollwert an, indem die Motordrehzahl bzw. die Motorleistung durch das Einwirken (1) auf Stellglied (2) geändert wird. Die ermittelte Drehzahl wird anschließend über das Stellglied (2) dem Motor (3) vorgegeben. Der Motor (3) fährt mit der vorgegeben Drehzahl, wobei der Istwert des Kraftstoffverbrauchs weiterhin mit einer Abtastzeit gemessen wird und an den Kraftstoffverbrauchregler (1) gesandt wird. Hier wiederholt sich der Prozess, indem der Vergleich und die anschließende Angleichung des Istwerts an den Sollwert stattfindet.

In der zweiten Zeichnung (Fig. 2) - ebenfalls als Blockschaltbild dargestellt - wird der unter Figur 1 beschriebene Regelkreis durch ein weiteres Messglied ergänzt. Das Messglied (4) ist der Tempomat. In diesem Regelkreis werden zwei Werte - die Obergrenze des Kraftstoffverbrauches S1 und der Sollwert für die Geschwindigkeit S2 - vorgegeben, wobei S1 die Obergrenze für S 2 ist. Der resultierende Sollwert wird über das Stellglied (2) an den Motor (3) weitergeleitet und hier umgesetzt. Gleichzeitig werden zwei Istwerte - Benzinverbrauch 11 und Geschwindigkeit 12 - mit einer Abtastzeit gemessen und an die entsprechenden Regler [l1 an (1) und l2 an (2)] gesandt. Die Istwerte werden wie unter Figur 1 beschrieben mit den Sollwerten verglichen und durch die Einstellung der Motordrehzahl an die Sollwerte angepasst. So lange der Sollwert S1 nicht überschritten wird, bleibt der Sollwert S2 unverändert. Sobald der Sollwert S1, z. B. in Abhängigkeit von den Straßenverhältnissen (Steigungen, unterschiedlich starkem Gegenwind) überschritten wird, kann der Sollwert S2 deaktiviert werden oder auf einen anderen Wert gesetzt werden.

Im Ergebnis kann also ein Kraftstoffverbrauchsregler in Kombination mit einer Geschwindigkeitsregelanlage genutzt werden, wobei der Kraftstoffverbrauch effizient eingespart werden kann und die Geschwindigkeitseinstellung über den Benzinverbrauch geregelt werden kann. Außerdem erfolgt die Arbeitsweise des Kraftstoffverbrauchsreglers unter Berücksichtigung von wechselnden Straßensituationen (Innenstadt, Landstraße und Autobahn), was zu einer gezielten Kraftstoffeinsparung beiträgt. Eine gezielte Kraftstoffeinsparung führt sowohl zu einer ökonomischen als auch zu einer umweltfreundlichen Fahrweise.

### BEZUGSZEICHENLISTE

- **KV**: Kraftstoffverbrauchsregler
- **SG**: Stellglied
- **M**: Motor
- **T**: Tempomat
- **S**: Sollwert [ S1 - Sollwert1, S2 - Sollwert2]
- **I**: Istwert [I1 - Istwert1, I2 - Istwert2]

## Patentansprüche

1. Motorbetriebenes Kraftfahrzeug mit einem Messinstrument, weiches eine Erfassung des Istwerts des Kraftstoffverbrauchs vornimmt, und
- ein Wert des Kraftstoffverbrauchs einem Kraftstoffverbrauchsregler vorgebbar ist, und
- durch das Betätigen des Bremspedals oder des Kupplungspedals eine Deaktivierung des Kraftstoffverbrauchsreglers erfolgt,
**dadurch gekennzeichnet, dass**
- der Wert des Kraftstoffverbrauchs als Sollwert vorgegeben wird und
- der Istwert des Kraftstoffverbrauches zur Steuerung der Einstellung der Motorleistung genutzt wird, indem der Kraftstoffverbrauchsregler den gemessenen Istwert mit dem Sollwert vergleicht und den Istwert an den vorgegebenen Sollwert angleicht, indem die Motorleistung durch das Einwirken auf ein Stellglied geändert wird und
- durch das Betätigen des Gaspedals eine Deaktivierung des Kraftstoffverbrauchsreglers erfolgt.

2. Kraftfahrzeug nach Anspruch 1, **dadurch gekennzeichnet, dass** die Deaktivierung der Motorsteuerung manuell erfolgt.

3. Kraftfahrzeug nach einem der vorhergehenden Ansprüche, **dadurch gekennzeichnet, dass** die Sollwerte des Kraftstoffverbrauchs manuell einzustellen sind.

4. Kraftfahrzeug nach einem der vorhergehenden Ansprüche, **dadurch gekennzeichnet, dass** unterschiedliche Sollwerte des Kraftstoffverbrauchs einstellbar sind.

5. Kraftfahrzeug nach Anspruch 4, **dadurch gekennzeichnet, dass** drei unterschiedliche Sollwerte des Kraftstoffverbrauchs in Abhängigkeit von der Straßensituation (Innenstadt, Landstraße und Autobahn) einstellbar sind.

6. Kraftfahrzeug nach Anspruch 5, **dadurch gekennzeichnet, dass** die Einstellung der wechselnden Sollwerte des Kraftstoffverbrauchs automatisch mit Hilfe eines Navigationssystems erfolgt.

7. Anwendung eines Kraftfahrzeugs nach einem der vorhergehenden Ansprüche, **dadurch gekennzeichnet, dass** die Beschleunigung über den eingestellten Sollwert des Kraftstoffverbrauchs erfolgt.

## Claims

1. Engine-powered vehicle comprising a measuring instrument that registers the actual value for fuel consumption, and
- a value of the fuel consumption can be preset on a fuel consumption regulator, and
- by operation of the brake pedal or of the clutch pedal, a deactivation of the fuel consumption regulator takes place,
**characterised in that**
- the value of fuel consumption is preset as setpoint value, and
- the actual value of the fuel consumption regulator is used for controlling the setting of the engine power **in that** the fuel consumption regulation compares the measured actual value with the setpoint value and matches the actual value to the preset setpoint value by changing the engine power by action on an actuator, and
- by operation of the brake pedal or of the clutch pedal, a deactivation of the fuel consumption regulator takes place,

2. Vehicle according to claim 1, **characterised in that** the deactivation of the engine control is performed manually.

3. Vehicle according to one of the preceding claims, **characterised in that** the setpoint values for fuel consumption are to be adjusted manually.

4. Vehicle according to one of the preceding claims, **characterised in that** different setpoint values for fuel consumption can be adjusted.

5. Vehicle according to claim 4, **characterised in that** three different setpoint values for fuel consumption can be adjusted depending on the road situation (inner city, cross-country roads and motorway).

6. Vehicle according to claim 5, **characterised in that** the adjustment of the changing setpoint values for fuel consumption is performed automatically with the aid of a navigation system.

7. Use of a vehicle according to one of the preceding claims, **characterised in that** the acceleration takes place via the set setpoint value for fuel consumption.

## Revendications

1. Véhicule motorisé avec un instrument de mesure qui effectue un enregistrement de la valeur réelle de la consommation de carburant, et
• une valeur de consommation de carburant pouvant être prescrite en consigne à un régulateur de consommation de carburant, et
• ce régulateur de consommation de carburant étant désactivé en actionnant la pédale de frein ou la pédale d'embrayage,
**caractérisé par le fait**
• **que** la valeur de consommation du carburant est donnée en tant que valeur de consigne et
• **que** la valeur réelle de la consommation de carburant est utilisée pour piloter le réglage de la puissance du moteur en ce que le régulateur de consommation de carburant compare la valeur réelle mesurée avec la valeur de consigne et adapte la valeur réelle à la valeur de consigne prescrite en modifiant la puissance du moteur au moyen de l'actionnement d'un organe de • commande et
• **qu'**il se produit une désactivation du régulateur de consommation de carburant par actionnement de l'accélérateur.

2. Véhicule selon la revendication 1, **caractérisé par le fait que** la désactivation de la commande du moteur se fait manuellement.

3. Véhicule selon une des revendications précédentes, **caractérisé par le fait que** les valeurs de consigne de la consommation de carburant sont réglées manuellement.

4. Véhicule selon une des revendications précédentes, **caractérisé par le fait que** l'on peut régler des valeurs de consigne différentes de consommation du carburant.

5. Véhicule selon la revendication 4, **caractérisé par le fait que** l'on peut régler trois valeurs de consigne différentes de la consommation de carburant en fonction des conditions de route (centre-ville, route de campagne et autoroute).

6. Véhicule selon la revendication 5, **caractérisé par le fait que** le réglage des valeurs de consigne changeantes est effectué automatiquement à l'aide d'un système de navigation.

7. Application d'un véhicule selon une dés revendications précédentes, **caractérisé par le fait que** l'accélération est effectuée via la valeur de consigne réglée de la consommation de carburant.
